# EUROPEAN PATENT SPECIFICATION

(11) **EP 0 425 481 B1**
(45) Date of publication and mention of the grant of the patent: **15.12.1993**
(21) Application number: 91200073.4
(22) Date of filing: 22.08.1986
(51) Int. Cl.: B01J 19/30, B01D 3/16, B01D 53/18

(54) **Support device for a packed column**
Tragrost für eine Füllkörperkolonne
Support pour une colonne garnie

(43) Date of publication of application: 02.05.1991
(62) Divisional of application: 86306550.4
(73) Proprietor: NORTON COMPANY, Worcester, MA 01615-0008 (US)
(72) Inventor: Rukovena, Frank, Tallmadge, Ohio 44278 (US); Robinson, Kenneth, Stafford, ST20 0E2 (GB)
(74) Representative: Singleton, Jeffrey

(56) References cited:
- GB-A- 845 369
- GB-A- 1 294 926

## Description

This invention relates to a support device for a packed column. More particularly the invention relates to a support device for supporting a packing material in a packed column having counterflowing gas and liquid.

Packed columns are typically used for gas absorption and for distillation. The column contains a packing material through which the liquid usually flows downwardly and the gas usually flows upwardly. The packing material may, for example, comprise Raschig (Trade Mark) rings or Pall (Trade Mark) rings.

It is often desirable to take a sidestream from the packed column, and to do so presents particular problems. In particular it is necessary to provide a support device for the packing material beneath which is situated a collection tray.

The support device permits liquid to pass downwardly therethrough to be collected by the collection tray from where it can be directed to a side of the column. A proportion of the liquid is taken from the column as a sidestream, and the remainder, if any, is fed back to the column either above or below the collection tray.

The sidestream may be fed to another part of the chemical plant, or it may be recycled to the column at a position either above or below the collection tray.

It is clear from the foregoing that two separate items (ie. a collection tray and a support device) are needed when a sidestream is taken from a column. Furthermore, a spacing of 1 or 2 metres may be necessary between the support device and the collection tray. Thus, the provision of a sidestream in a column significantly increases capital costs. In addition, maintenance is time consuming because two separate items must be maintained.

Specification No US-A-3222040 discloses a support plate for a packed tower. The support plate comprises a perforated base portion and a plurality of formations extending from the base portion. Each formation comprises spaced apart perforated walls.

Specification No US-A-4171333 discloses a perforated support plate for supporting and injecting fluids into a bed of packing elements in treatment towers or vessels. The support plate comprises adjoining horizontal perforated wall portions which have extending therefrom spaced perforated sidewalls.

It is an object of the present invention to provide an improved support device for a packed column.

According to the invention there is provided a support device for supporting a packing material in a packed column having counterflowing gas and liquid, the support device comprising a support device for supporting a packing material in a packed column having a counterflowing gas and liquid, the support device comprising a plate having a plurality of formations each formation comprising spaced side walls connected by an upper wall, said side walls being perforated to permit gas flow therethrough, characterised in that the formations comprise streamlining means to improve the efficiency of the gas flow through the column.

The spaced side walls of each formation may be arranged parallel to one another and a first streamlining means may be provided on the underside of the upper wall. The first streamlining means may be integral with the upper wall. Instead of, or addition to, the first streamlining means, second streamlining means may be provided on the underside of the plate between adjacent formations. The second streamlining means may be integral with the plate or plate formations. If integral first and second streamlining means are provided, the construction has greater structural strength and is easier to manufacture.

In one embodiment each formation may comprise a single-skin construction.

In another embodiment each formation may comprise a plural-skin construction, advantageously a double-skin construction. To this end, a plurality of cover members may be provided, each cover member being disposed over a respective one of the formations. Each cover member may be adapted to permit the flow of gas therethrough by the provision of a plurality of apertures therein.

The cover members help to reduce further the amount of liquid which can flow through the support device.

The sidewalls of the formations are connected by an upper wall. Desirably the cover members each comprise spaced side walls connected by an upper wall. The upper walls may extend substantially transverse to the side walls and substantially parallel to the plane of the plate.

The side walls of the formations may be arranged substantially parallel to one another. In use, the side walls can be disposed substantially vertically.

However, the side walls of the formations may be arranged such that the distance between the side walls increases or decreases with increasing distance from the upper wall; it is preferred that this distance decreases because it helps to reduce the amount of liquid which can flow through the support device.

Preferably the angle of divergence of the side walls is less than 15°, more preferably less than 10°.

The formations comprise streamlining means in order to improve the efficiency of gas flow therethrough by reducing the pressure drop through the formations. This is especially useful when the double-skin construction is provided.

The first and/or second streamlining means may have a circular or triangular configuration, for example.

Preferably the formations extend across the plate and are substantially parallel to one another.

Reference is now made to the accompanying drawings, in which:-
Figure 1 is a diagrammatic plan view of a first embodiment of a support device in a packed column not according to the invention;
Figure 2 is a section on lines 2-2 of Figure 1;
Figure 3 is a section on lines 3-3 of Figure 1;
Figure 4 is a perspective view of the support device shown in Figures 1 to 3 with part broken away;
Figure 5 is a diagrammatic plan view of a second embodiment of a support device in a packed column not according to the invention;
Figure 6 is a section on lines 6-6 of Figure 5:
Figure 7 is a section on lines 7-7 of Figure 5:
Figure 8 is a modification of the embodiment shown in Figure 7;
Figure 9 is a modification of the embodiment shown in Figure 7;
Figure 10 is a perspective view of a modification of the support device shown in Figures 1 to 4;
Figure 11 is a perspective view of an embodiment of support device according to the invention;
Figure 12 is a perspective view of a chimney tray provided with streamlining according to the invention; and
Figure 13 is a perspective view of a packing support plate provided with streamlining according to the invention.

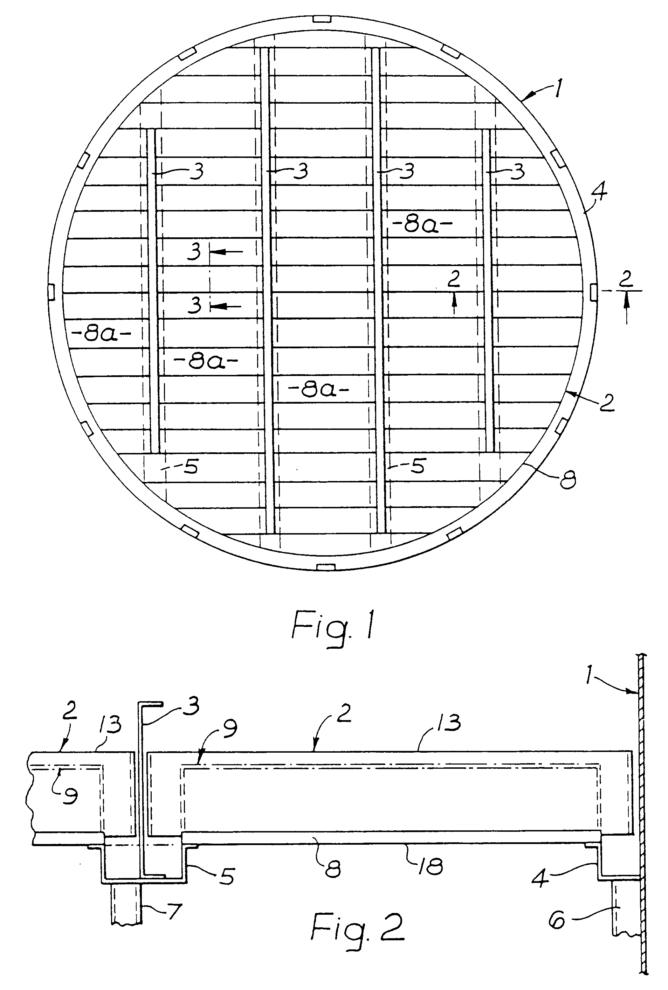

In Figures 1 to 4 a packed column generally designated 1 is provided with a support device 2; a packing material 90 is supported in the column 1 on top of the support device 2.

The support device 2 includes a plurality of beams 3 extending across the column 1, which serve to reinforce structurally the support device 2, and enable the support device 2 to be secured to column 1.

The support device 2 also includes a circumferential sump 4 provided around the periphery thereof, and a plurality of parallel sumps 5 extending across the support device 2. The sumps 5 are substantially parallel to the beams 3, and each sump 5 is located in the region of a respective one of the beams 3.

Downpipes 6 (of which only one is shown) are secured to the sump 4, and downpipes 7 (of which only one is shown) are secured to the sumps 5. Liquid can be taken from the column 1 from the downpipes 6 and 7.

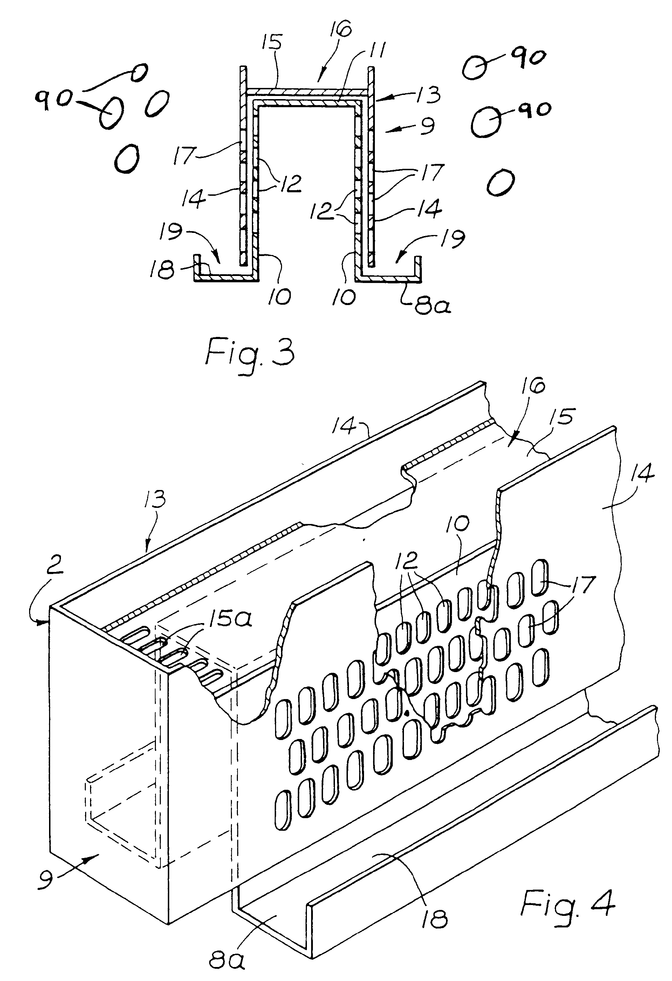

The support device 2 comprises a plate 8 having a plurality of formations 9 provided thereon; the plate 8 and formations 9 provide a corrugated configuration. The plate 8 is formed from a plurality of elongate members 8a one of which is shown in cross-section in Figure 3. The members 8a are juxtaposed and may be secured together by welding. It will be appreciated that the members 8a could be manufactured in one piece.

The formations 9 comprise spaced side walls 10 connected by an upper wall 11. A plurality of apertures 12 are provided in the side walls 10 to permit the flow of gas therethrough.

A double-skin construction is provided by the formations 9 which further include cover members 13; each cover member 13 comprises spaced side walls 14 which are connected by an upper wall 15. The side walls 14 extend above the upper wall 15 to define a channel 16 therebetween; the channel 16 acts as collecting means to collect liquid flowing downwardly through the column. The side walls 14 of each cover member 13 are provided with apertures 17 to permit the flow of gas therethrough. The apertures 17 are disposed out of alignment with the apertures 12 in order to reduce further the flow of liquid therethrough.

The channels 16 extend along the top of the formations 9 and deliver the liquid collected either to the circumferential sump 4 or to one of the sumps 5. The upper wall 15 of each cover member 13 is provided with aperture 15a at opposite ends thereof. The apertures 15a are disposed either above one of the sumps 5 or above the sump 4, so that liquid can drain into the sump from the channel 16.

Thus, the channels 16 reduce substantially the amount of liquid which flows through the apertures 12 and 17. If the channels 16 were not provided then liquid falling on the upper wall 15 would run down the side walls 14 and a portion of this liquid may flow through the apertures 12 and 17.

The plate 8 is provided with a base 18 and the formations 9 extend upwardly from the base 18. The base is non-perforated, so that neither liquid nor gas can flow therethrough. The base 18, together with adjacent formations 9, define a channel 19 therebetween. The channel 19 collects liquid not collected by the channel 16 and delivers this liquid either to the circumferential sump 4 or to one of the sumps 5.

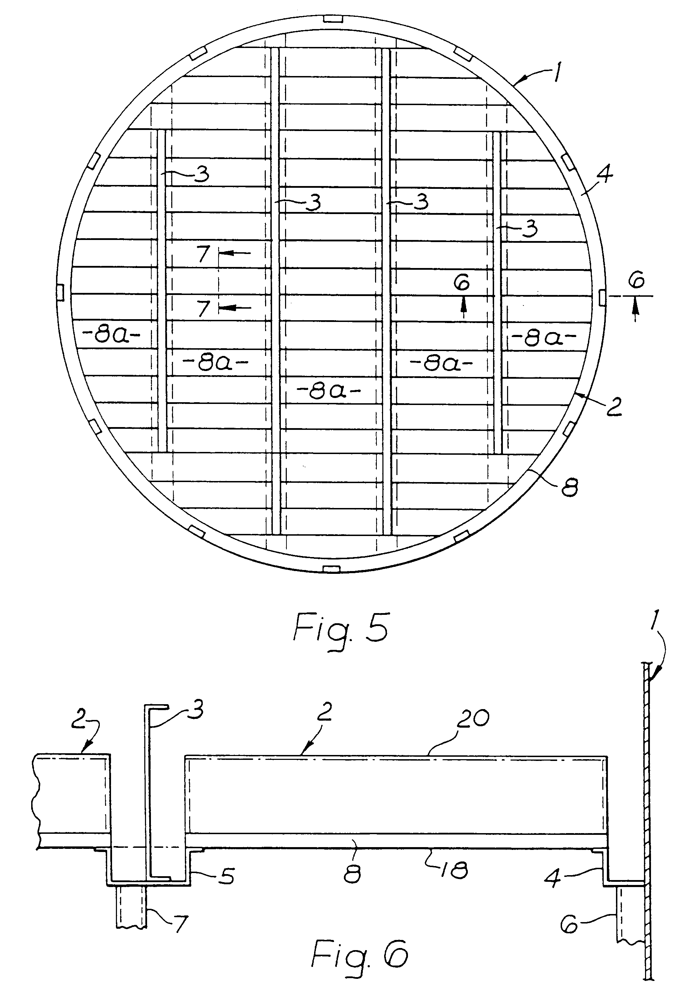

Another embodiment is shown in Figures 5 to 7; many of the parts in Figures 5 to 7 are similar to those shown in Figures 1 to 3 and like parts are designated with like reference numerals.

The principal difference is that the embodiment shown in Figures 5 to 7 is provided with a single-skin construction. Formations 20 are each provided with spaced side walls 21 and an upper wall 22 having a channel 23 therein. The channel 23 serves as collecting means and performs a similar function to the channel 16 in the embodiment shown in Figures 1 to 3.

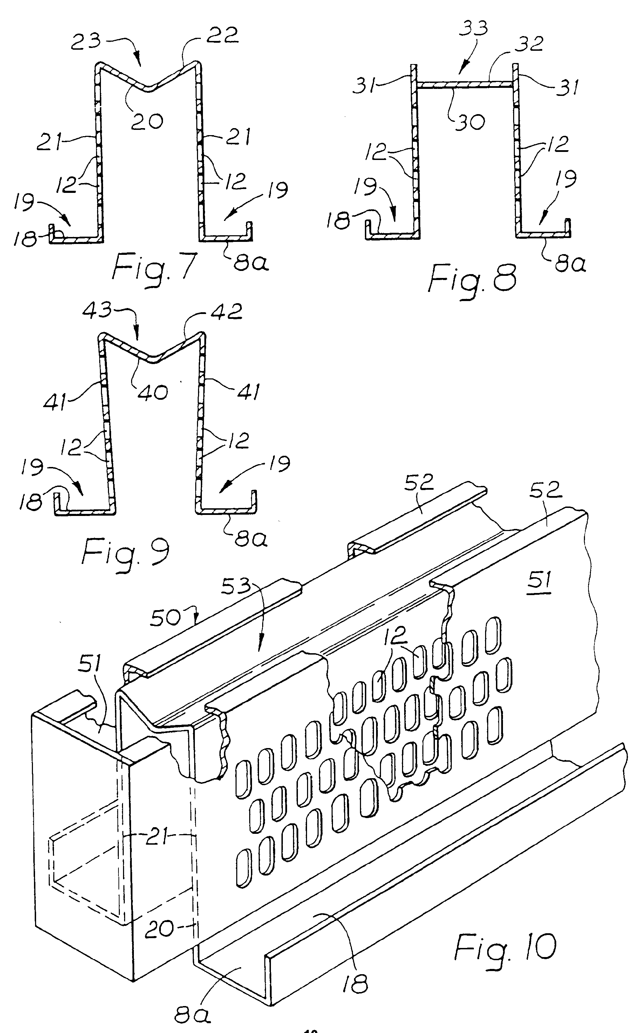

Figure 8 shows a modification of the formations 20 shown in Figure 6. The formations 20 are replaced with formations 30 which comprise spaced side walls 31 and an upper wall 32. The side walls 31 extend above the upper wall 32 and define a channel 33 therebetween. The channel 33 serves as collecting means and performs a similar function to the channels 16 and 23.

Figure 9 shows a further modification of the formations 20 shown in Figure 7. The formations 20 are replaced with formations 40 which comprise divergent spaced side walls 41 and an upper wall 42 having a channel 43 therein. The channel 43 serves as collecting means and performs a similar function to the channels 16, 23 and 33.

The distance between the side walls 41 decreases with increasing distance from the upper wall 42. This divergence helps to prevent liquid from flowing through the apertures 12.

In Figure 10 a further embodiment of support device 2 is shown. The formations 20 in this embodiment are the same as the formations 20 shown in Figures 6 and 7, except that they include cover members 50 which comprise spaced side walls 51 and an upper wall 52. A gap 53 is provided in the upper wall 52 through which liquid can flow to the channel 23.

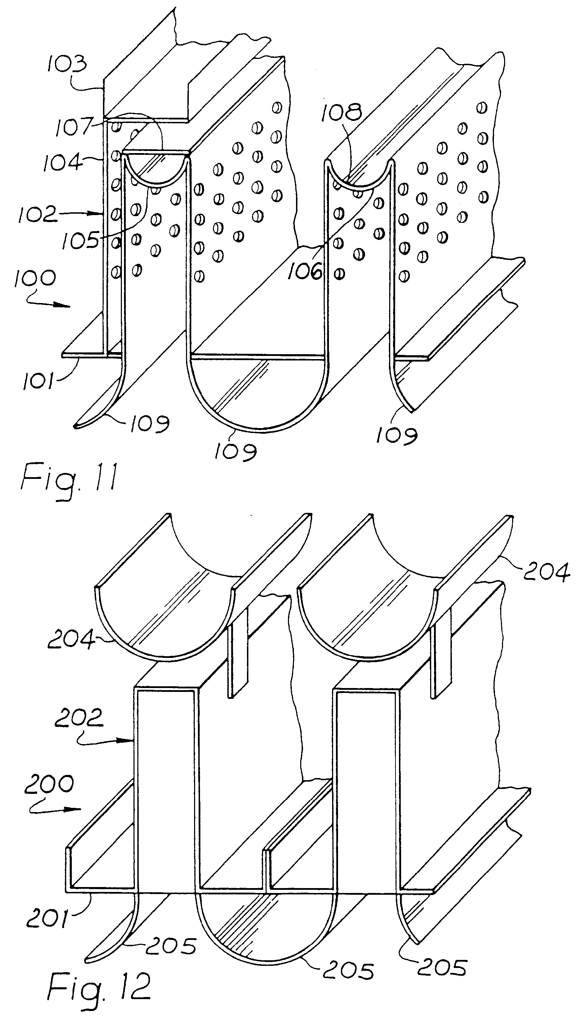

In Figure 11 an embodiment of support device in accordance with the present invention is designated 100. The support device 100 comprises a plate 101 with formations 102 and a collecting channel 103; the formations 102 comprise a double-skin construction and include cover members 104. For convenience only one cover member 104 is shown.

First streamlining means 105 and 106 are provided beneath upper walls 107 and 108 respectively of the formations 102. The streamlining means 105 and 106 are respectively integral and non-integral with the formations 102, and are circular in shape.

Second streamlining means 109 are provided beneath the plate 101 between adjacent formations 102. The second streamlining means 109 are integral with the formations 102.

Figure 12 shows another embodiment in accordance with the present invention and having a chimney tray 200 comprising a plate 201 and formations 202. The formations 202 are provided with streamlining means 204 and 205 to improve the gas flow. Gas flow apertures are omitted from Figure 12.

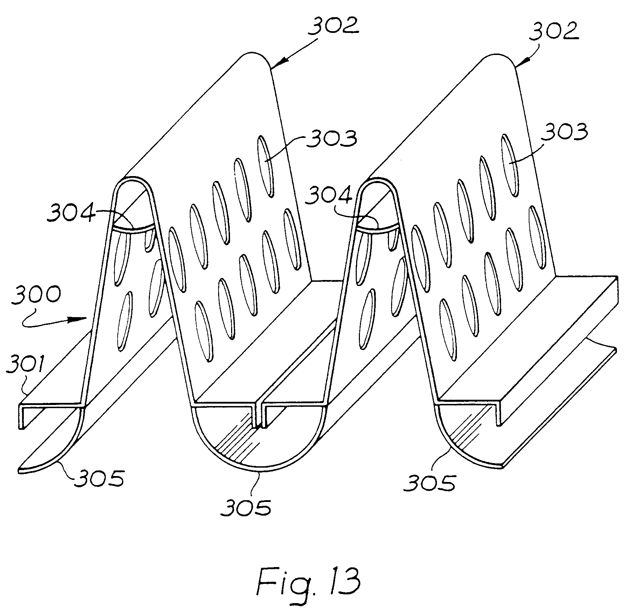

Figure 13 shows a further embodiment in accordance with the present invention and having a packing support plate 300 comprising a plate 301 and formations 302. The formations 302 are provided with gas flow apertures 303. Streamlining means 304 and 305 are provided to improve the gas flow.

## Claims

1. A support device (100,200,300) for supporting a packing material (90) in a packed column (1) having a counterflowing gas and liquid, the support device comprising a plate (101;201,301) having a plurality of formations (102;202;302) each formation comprising spaced side walls connected by an upper wall (107,108), said side walls being perforated to permit gas flow therethrough, characterised in that the formations comprise streamlining means (105,106,109; 204,205; 304,305) to improve the efficiency of the gas flow through the column.

2. A support device according to Claim 1, wherein the spaced side walls are arranged substantially parallel to one another.

3. A support device according to claim 2, wherein each formation (102) further comprises a first streamlining means (105,106) provided on the underside of the upper wall.

4. A support device according to Claim 3, wherein the first streamlining means (105,106) is integral with the upper wall.

5. A support device according to claim 2, wherein each formation (202) further comprises a further streamlining means (204) provided on top of the upper wall.

6. A support device according to any of Claims 3 to 5, wherein the first streamlining means (105,106) is arcuate.

7. A support device according to any of the preceding claims, wherein each formation (102;202;302) further comprises a second streamlining means (109;205;305) provided on the underside of the plate (101;201;301) between adjacent formations (102;202;302).

8. A support device according to Claim 7, wherein the second streamlining means (109;205;305) are integral with the plate (101;201;301) or with the plate formation (102;202;302).

9. A support device according to Claim 7 or 8, wherein the second streamlining means (109;205;305) are arcuate.

10. A support device according to any of the preceding claims, wherein each formation (202;302) has a single-skin construction.

11. A support device according to any of claims 1 to 9, wherein each formation (102) has a plural-skin construction.

12. A support device according to claim 11, wherein each formation (102) has a double-skin construction.

13. A support device according to claim 1 and any of claims 7 to 12 when appended thereto, wherein the distance between the side walls increases or decreases with increasing distance from the upper wall.

14. A support device according to claim 13, wherein the angle of divergence of the side walls is less than 15°.

15. A support device according to any of the preceding claims, wherein the streamlined means (105,106;109;204;205;304;305) have circular or triangular configurations.

16. A support device according to any of the preceding claims, wherein the formations (102;202;302) extend across the plate (101;201;301) and are substantially parallel to one another.

## Patentansprüche

1. Tragrost (100, 200, 300) zum Halten eines Füllmaterials (90) in einer Füllkörperkolonne (1) mit Gas und Flüssigkeit im Gegenstrom, wobei der Tragrost eine Platte (101; 201; 301) mit einer Vielzahl von Ausformungen (102; 202; 302) sowie jede Ausformung mit Abstand voneinander angeordnete Seitenwände aufweist, die durch eine obere Wand (107, 108) miteinander verbunden sind, und wobei diese Seitenwände perforiert sind, um Gas hindurchfließen zu lassen, dadurch gekennzeichnet, daß die Ausformungen Stromlinienverkleidungen (105, 106, 109; 204, 205; 304; 305) aufweisen, um den Wirkungsgrad der Gasströmung durch die Kolonne zu verbessern.

2. Tragrost nach Anspruch 1, wobei die mit Abstand angeordneten Seitenwände im wesentlichen parallel zueinander ausgerichtet sind.

3. Tragrost nach Anspruch 2, wobei jede Ausformung (102) ferner eine erste Stromlinienverkleidung (105, 106) an der Unterseite der oberen Wand aufweist.

4. Tragrost nach Anspruch 3, wobei die erste Stromlinienverkleidung (105, 106) direkt durch die obere Wand gebildet wird.

5. Tragrost nach Anspruch 2, wobei jede Ausformung (202) ferner eine weitere Stromlinienverkleidung (204) auf der Oberseite der oberen Wand aufweist.

6. Tragrost nach einem der Ansprüche 3 bis 5, wobei die ersten Stromlinienverkleidungen (105, 106) gekrümmt sind.

7. Tragrost nach einem der vorhergehenden Ansprüche, wobei jede Ausformung (102; 202; 302) ferner eine zweite Stromlinienverkleidung (109; 205; 305) an der Unterseite der Platte (101; 201; 301) zwischen benachbarten Ausformungen (102; 202; 302) aufweist.

8. Tragrost nach Anspruch 7, dadurch gekennzeichnet, daß die zweiten Stromlinienverkleidungen (109; 205; 305) direkt durch die Platte (101; 201; 301) oder durch die Plattenausformungen (102; 202; 302) gebildet werden.

9. Tragrost nach Anspruch 7 oder 8, wobei die zweiten Stromlinienverkleidungen (109; 205; 305) gekrümmt sind.

10. Tragrost nach einem der vorhergehenden Ansprüche, wobei jede Ausformung (202; 302) eine Einwandkonstruktion ist.

11. Tragrost nach einem der Ansprüche 1 bis 9, wobei jede Ausformung (102) eine Mehrwandkonstruktion ist.

12. Tragrost nach Anspruch 11, wobei jede Ausformung (102) eine Doppelwandkonstruktion ist.

13. Tragrost nach Anspruch 1 und einem der Ansprüche 7 bis 12, wenn mit jenem verbunden, wobei der Abstand zwischen den Seitenwänden mit wachsendem Abstand von der oberen Wand zu- oder abnimmt.

14. Tragrost nach Anspruch 13, wobei der Spreizwinkel der Seitenwände kleiner als 15° ist.

15. Tragrost nach einem der vorhergehenden Ansprüche, wobei die Stromlinieneinrichtungen (105, 106; 109; 204; 205; 304; 305) kreisförmige oder dreieckige Konfigurationen aufweisen.

16. Tragrost nach einem der vorhergehenden Ansprüche, wobei die Ausformungen (102; 202; 302) sich quer zur Platte (101; 201; 301) erstrecken und im wesentlichen parallel zueinander sind.

## Revendications

1. Support (100, 200, 300) destiné à supporter une matière de garnissage (90) dans une colonne garnie (1) dans laquelle un gaz et un liquide s'écoulent à contre-courant, ce support comprenant une plaque (101 ; 201 ; 301) ayant une série de formations (102 ; 202 ; 302) comprenant chacune des parois latérales espacées réunies par une paroi supérieure (107, 108), ces parois latérales étant perforées pour permettre le passage du gaz, caractérisé par le fait que les formations comprennent des moyens de profilage (105, 106, 109 ; 204, 205 ; 304, 305) destinés à améliorer l'efficacité de l'écoulement de gaz dans la colonne.

2. Support selon la revendication 1, sur lequel les parois latérales espacées sont disposées sensiblement parallèlement.

3. Support selon la revendication 2, sur lequel chaque formation (102) comprend en outre un premier moyen de profilage (105, 106) prévu sur le dessous de la paroi supérieure.

4. Support selon la revendication 3, sur lequel le premier moyen de profilage (105, 106) fait corps avec la paroi supérieure.

5. Support selon la revendication 2, sur lequel chaque formation (202) comprend en outre un autre moyen de profilage (204) prévu sur le dessus de la paroi supérieure.

6. Support selon l'une des revendications 3 à 5, sur lequel le premier moyen de profilage (105, 106) est arqué.

7. Support selon l'une des revendications précédentes, sur lequel chaque formation (102 ; 202 ; 302) comprend en outre un second moyen de profilage (109 ; 205 ; 305) prévu sur le dessous de la plaque (101 ; 201 ; 301) entre les formations contiguës (102 ; 202 ; 302).

8. Support selon la revendication 7, sur lequel les seconds moyens de profilage (109 ; 205 ; 305) font corps avec la plaque (101 ; 201 ; 301) ou avec les formations de celle-ci (102 ; 202 ; 302).

9. Support selon l'une des revendications 7 et 8, sur lequel les seconds moyens de profilage (109 ; 205 ; 305) sont arqués.

10. Support selon l'une des revendications précédentes, sur lequel chaque formation (202 ; 302) a une construction à simple paroi.

11. Support selon l'une des revendications 1 à 9, sur lequel chaque formation (102) a une construction à plusieurs parois.

12. Support selon la revendication 11, sur lequel chaque formation (102) a une construction à double paroi.

13. Support selon la revendication 1 et l'une des revendications 7 à 12 lorsqu'elle est annexée à celle-ci, sur lequel la distance entre les parois latérales augmente ou diminue lorsque la distance de la paroi supérieure augmente.

14. Support selon la revendication 13, sur lequel l'angle de divergence des parois latérales est inférieur à 15°.

15. Support selon l'une des revendications précédentes, sur lequel les moyens de profilage (105, 106, 109 ; 204, 205 ; 304, 305) sont circulaires ou triangulaires.

16. Support selon l'une des revendications précédentes, sur lequel les formations (102 ; 202 ; 302) s'étendent en travers de la plaque (101 ; 201 ; 301) et sont sensiblement parallèles.
